# FASCICULE DE BREVET EUROPEEN

(11) **EP 4 324 070 B1**
(45) Date de publication et mention de la délivrance du brevet: **01.01.2025**
(21) Numéro de dépôt: 22720964.0
(22) Date de dépôt: 05.04.2022
(51) Int. Cl.: H02J 50/00, H02J 50/10, H02J 11/00, H01F 38/14, H01F 38/30

(54) **PROCÉDÉ ET DISPOSITIF DE RECUPERATION D'ENERGIE ELECTRIQUE SUR UN CÂBLE DE PUISSANCE MONOPHASÉ OU MULTIPHASÉ**
VERFAHREN UND VORRICHTUNG ZUR RÜCKGEWINNUNG VON ELEKTRISCHER ENERGIE AUF EINEM EIN- ODER MEHRPHASIGEN STROMKABEL
METHOD AND DEVICE FOR RECOVERING ELECTRICAL ENERGY ON A SINGLE-PHASE OR MULTIPHASE POWER CABLE

(30) Priorité: 16.04.2021 FR 2103953
(43) Date de publication de la demande: 21.02.2024
(73) Titulaire: Socomec S.A., 67230 Benfeld (FR)
(72) Inventeur: GAUTARD, Dominique, 58640 VARENNES-VAUZELLES (FR); SAVE, Thierry, 58660 COULANGES LES NEVERS (FR)
(74) Mandataire: Cabinet Laurent & Charras
(86) Numéro de dépôt international: PCT/EP2022/058965
(87) Numéro de publication internationale: WO 2022/218754

(56) Documents cités:
- WO-A1-2011/012143
- FR-A1- 3 093 588
- JP-B2- 4 927 761
- US-B2- 10 651 686

## Description

### Domaine technique

La présente invention concerne un procédé de récupération d'énergie électrique à partir d'un câble de puissance comportant au moins deux conducteurs de phase, ainsi qu'un dispositif de récupération d'énergie électrique mettant en oeuvre ledit procédé et comportant un noyau magnétique sous la forme d'un tore, agencé pour être installé autour dudit câble de puissance et former un circuit magnétique apte à capter un champ magnétique induit par le courant primaire traversant les conducteurs de phase dudit câble de puissance, et un bobinage de détection enroulé autour dudit noyau magnétique et agencé pour induire une tension secondaire à partir dudit champ magnétique induit et délivrer aux bornes dudit bobinage de détection une tension de sortie permettant d'alimenter différents types de systèmes électriques.

### Technique antérieure

De plus en plus de capteurs, de systèmes ou d'accessoires sont implantés sur les réseaux électriques pour assurer des fonctions de protection, de surveillance, de comptage, etc. Ces dispositifs ont, dans la plupart des cas, besoin d'être alimentés en énergie électrique. Une solution consiste à prélever cette énergie électrique directement sur les câbles de puissance dans lesquels circule un courant électrique à l'aide de dispositifs de récupération d'énergie basés sur le principe de l'auto-induction, évitant ainsi le recours à une source d'énergie additionnelle (batterie, énergie renouvelable, etc.).

Pour ce faire, un noyau magnétique est généralement fixé sur un des conducteurs de phase du câble de puissance, parcouru par un courant et formant un circuit primaire. Ce courant crée un champ magnétique radial autour du conducteur de phase, qui induit la circulation d'un flux magnétique dans le noyau magnétique. Un bobinage de détection est enroulé autour de ce noyau magnétique pour former un circuit secondaire. Ainsi, la variation du flux magnétique circulant dans le noyau magnétique induit une tension aux bornes du bobinage de détection. Après traitement du signal, la tension induite récupérée aux bornes du bobinage de détection permet d'alimenter différents types de systèmes électriques, tels qu'à titre d'exemples un ou plusieurs capteurs de température, de position, de courant, d'usure, etc., un ou plusieurs éléments d'éclairage, de signalisation, de communication, etc. sans que ces exemples ne soient limitatifs.

A ce jour, il existe différentes solutions de récupération d'énergie électrique sous la forme soit d'un noyau magnétique torique fermé ou ouvrant, soit d'un câble magnétique spiralé dont un exemple est donné dans la publication FR 3093588 de la demanderesse. Mais toutes ces solutions sont ajoutées sur un unique conducteur de phase du câble de puissance. C'est également le cas de la solution décrite dans la publication WO 2011/012143 A1 qui propose un noyau magnétique bobiné, en forme d'arc de cercle, qui se fixe sur un des conducteurs de phase du câble de puissance. La publication US 10 651 686 propose encore une autre solution sous la forme d'une carte de circuit imprimé comportant au moins une bobine d'induction, fixée sur un conducteur de phase par des colliers de serrage ou une pince.

Les solutions actuelles sont invasives et contraignantes en termes de mise en oeuvre parce qu'elles ne peuvent se monter ou se fixer que sur un seul des conducteurs de phase du câble de puissance. Elles ne sont donc pas utilisables directement sur des câbles de puissance multiconducteur, sans avoir à enlever la gaine de protection de manière à séparer les conducteurs de phase pour en isoler un seul. Elles sont en outre très difficiles à installer sur des câbles de puissance groupés et rassemblés dans des chemins de câbles.

En effet, les dispositifs de récupération d'énergie électrique connus ne fonctionnent pas s'ils sont positionnés directement sur un câble de puissance et autour de tous les conducteurs de phase, à l'instar d'un capteur de courant différentiel. Dans ce cas, la somme vectorielle des courants qui circulent dans tous les conducteurs de phase crée un champ magnétique globalement nul ou très faible. Ils seraient donc inopérants dans le cadre de la présente invention.

Plus précisément, dans un câble de puissance monophasé, comportant deux conducteurs de phase qui alimentent un récepteur monophasé, c'est le même courant qui circule dans les deux conducteurs. Si on met un noyau magnétique autour de ce câble de puissance, dans un système électrique parfaitement symétrique et équilibré, les flux magnétiques induits par chaque conducteur de phase dans le noyau magnétique sont égaux et de sens opposés. Un bobinage de détection réparti régulièrement sur la circonférence du noyau magnétique détecte la somme des flux. Cette somme étant nulle, aucune tension n'est générée aux bornes du bobinage car la tension induite dans une spire est compensée par la tension induite dans la spire diamétralement opposée.

De même, dans un câble de puissance triphasé, les courants qui circulent dans les trois conducteurs de phase sont de même amplitude mais déphasés de 120°. Un noyau magnétique placé autour des trois conducteurs de phase voit un champ magnétique tournant dont la somme vectorielle est nulle sur une période. La tension induite aux bornes d'un bobinage de détection régulièrement réparti autour du noyau magnétique est nulle, car à un instant donné, la tension induite dans une spire est compensée par la somme des tensions induites dans les spires situées à 120 et 240° par rapport à elle.

### Exposé de l'invention

La présente invention vise à proposer une nouvelle solution non invasive pour récupérer de l'énergie électrique à partir d'un câble de puissance et basée sur le principe de l'auto-induction, ayant l'avantage de faciliter la mise en place du dispositif de récupération d'énergie sur ledit câble de puissance, sans avoir besoin d'isoler un des conducteurs de phase, permettant d'équiper un câble de puissance avec un tel dispositif de récupération aussi bien lors de sa fabrication que sur site, et de pouvoir aisément le retirer et le remettre en place sur un câble de puissance en fonction du besoin, offrant ainsi une souplesse d'utilisation et une grande simplicité de mise en oeuvre du dispositif, tout en garantissant des performances suffisantes pour garantir l'auto-alimentation de systèmes électriques annexes.

Dans ce but, l'invention concerne un procédé de récupération d'énergie électrique consistant à-installer autour dudit câble de puissance un noyau magnétique sous la forme d'un tore, pour former un circuit magnétique apte à capter un champ magnétique induit par un courant primaire traversant les conducteurs de phase dudit câble de puissance,
- équiper ledit noyau magnétique d'un bobinage de détection pour induire une tension secondaire à partir dudit champ magnétique induit et délivrer aux bornes dudit bobinage de détection une tension de sortie,
- réaliser ledit circuit magnétique de manière hétérogène pour engendrer dans ledit circuit magnétique une circulation de flux magnétique dissymétrique permettant de maximiser ladite tension de sortie et d'obtenir ainsi une tension de sortie exploitable aux bornes dudit bobinage de détection.

Dans une forme préférée de l'invention, le procédé consiste à créer dans ledit noyau magnétique au moins un entrefer pour créer ladite hétérogénéité dans le circuit magnétique et engendrer ladite dissymétrie dans la circulation du flux magnétique.

Selon une première variante de réalisation, le procédé consiste à utiliser un noyau magnétique sous la forme d'un tore fermé et à pratiquer une coupe de la section dudit noyau magnétique pour créer un entrefer unique dont la largeur L est au moins égale à 100µm, et de préférence comprise entre 0.5 et 2mm. Il peut être prévu de diviser ledit entrefer unique en plusieurs entrefers élémentaires répartis sur un segment angulaire dudit noyau magnétique au plus égal à 120°.

Selon une deuxième variante de réalisation, le procédé consiste à couper en deux ledit noyau magnétique pour former un tore ouvrant constitué de deux demi-tores et créer deux entrefers, dont un entrefer principal et un entrefer secondaire. Il peut être prévu de créer deux entrefers de largeurs différentes, dont ledit entrefer principal de largeur L1 et ledit entrefer secondaire de largeur L2 inférieure à la largeur L1, la largeur L1 étant au moins égale à 100µm, et de préférence comprise entre 0.5 et 2mm, et la largeur L2 correspondant aux extrémités en contact des deux demi-tores et étant au plus égale à 20µm.

Le procédé peut prévoir de diviser ledit bobinage de détection en au moins deux bobines, situées dans une zone du noyau magnétique opposée audit entrefer principal, et disposées de part et d'autre dudit entrefer secondaire.

Dans une autre variante du procédé, il est possible de décentrer ledit noyau magnétique par rapport audit câble de puissance pour introduire un décalage entre lesdits conducteurs de phase et ledit circuit magnétique, créer ladite hétérogénéité dans le circuit magnétique et engendrer ladite dissymétrie dans la circulation du flux magnétique.

Également selon une autre variante de réalisation, il est possible d'ajouter un aimant dans ledit circuit magnétique en remplacement ou en complément d'un entrefer, agencé pour générer un champ de saturation qui coupe localement le flux magnétique induit dans ledit noyau magnétique par ledit courant primaire, créer une hétérogénéité dans ledit circuit magnétique et engendrer une dissymétrie dans la circulation du flux magnétique.

Il est enfin possible de réaliser un angle dans ledit noyau magnétique pour créer une hétérogénéité dans le circuit magnétique et engendrer une dissymétrie dans la circulation du flux magnétique.

Avantageusement, le procédé consiste à positionner ledit bobinage de détection dans une zone dudit noyau magnétique opposée audit entrefer, audit aimant et/ou audit angle ou audit couche pour maximiser la tension de sortie exploitable.

Préférentiellement, le procédé consiste à optimiser la position angulaire dudit noyau magnétique par rapport audit câble de puissance pour que ledit entrefer unique, ledit entrefer principal, ledit aimant et/ou ledit angle se situe en face d'un des conducteurs de phase dudit câble de puissance, position dans laquelle la tension de sortie exploitable aux bornes dudit bobinage de détection est à son maximum. Lorsque ledit câble de puissance est monophasé, le procédé prévoit d'aligner ledit entrefer unique, ledit entrefer principal, ledit aimant et/ou ledit angle avec les deux conducteurs de phase.

Pour atteindre cette position angulaire, le procédé consiste à détecter la tension de sortie aux bornes dudit bobinage de détection lors de l'installation dudit noyau magnétique autour dudit câble de puissance dans lequel circule ledit courant primaire, pour aider au repérage de ladite position angulaire optimale, puis à bloquer ledit noyau magnétique dans cette position.

Dans ce but, l'invention concerne également un dispositif de récupération d'énergie, dans lequel ledit circuit magnétique est hétérogène pour engendrer dans ledit circuit magnétique une circulation de flux magnétique dissymétrique , permettant de maximiser ladite tension de sortie et d'obtenir une tension de sortie exploitable aux bornes dudit bobinage.

Dans une forme préférée de l'invention, ledit noyau magnétique peut comporter au moins un entrefer pour créer ladite hétérogénéité dans ledit circuit magnétique et ladite dissymétrie dans la circulation du flux magnétique.

Selon une première variante de réalisation, ledit noyau magnétique peut être constitué d'un tore fermé, comportant un entrefer unique dont la largeur L est au moins égale à 100µm, et de préférence comprise entre 0.5 et 2mm. Cet entrefer unique peut le cas échéant être divisé en plusieurs entrefers élémentaires, répartis sur un segment angulaire dudit noyau magnétique au plus égal à 120°.

Dans une deuxième variante de réalisation, ledit noyau magnétique peut être constitué d'un tore ouvrant, comportant deux demi-tores et deux entrefers, dont un entrefer principal et un entrefer secondaire. Préférentiellement, lesdits entrefers ont des largeurs différentes : ledit entrefer principal de largeur L1 et ledit entrefer secondaire de largeur L2 inférieure à la largeur L1, la largeur L1 étant au moins égale à 100µm, et de préférence comprise entre 0.5 et 2mm, et la largeur L2 correspondant aux extrémités en contact des deux demi-tores et étant au plus égale à 20µm.

Ledit bobinage de détection peut être en outre divisé en au moins deux bobines, situées dans une zone du noyau magnétique opposée audit entrefer principal, et disposées de part et d'autre dudit entrefer secondaire.

Le dispositif de récupération d'énergie peut comporter un boitier ouvrant dans lequel sont logés ledit noyau magnétique et ledit bobinage de détection. Dans ce cas, ledit boitier comporte une fenêtre de passage pour ledit câble de puissance et ladite fenêtre de passage peut être avantageusement décentrée par rapport audit noyau magnétique pour introduire un décalage entre lesdits conducteurs de phase et ledit circuit magnétique. Ladite fenêtre de passage peut être ménagée dans un organe de décentrage distinct dudit boitier.

Dans une autre variante de réalisation, ledit dispositif de récupération d'énergie peut comporter un aimant dans ledit circuit magnétique en remplacement ou en complément d'un entrefer, agencé pour générer un champ de saturation qui coupe localement le flux magnétique induit dans ledit noyau magnétique par ledit courant primaire, créer une hétérogénéité dans ledit circuit magnétique et engendrer une dissymétrie dans la circulation du flux magnétique.

En outre, ledit noyau magnétique peut comporter un angle pour créer une hétérogénéité dans le circuit magnétique et engendrer une dissymétrie dans la circulation du flux magnétique.

Ledit bobinage de détection peut être avantageusement situé dans une zone dudit noyau magnétique opposée audit entrefer, audit aimant et/ou audit angle pour maximiser la tension de sortie exploitable.

Dans la forme préférée de l'invention, ledit dispositif de récupération comporte en outre un dispositif d'aide au positionnement agencé pour détecter la position angulaire optimale dudit noyau magnétique par rapport audit câble de puissance pour que ledit entrefer unique, ledit entrefer principal, ledit aimant et/ou ledit angle ou ledit couche se situe en face d'un des conducteurs de phase dudit câble de puissance, position angulaire optimale dans laquelle la tension de sortie exploitable aux bornes dudit bobinage est à son maximum. Il peut comporter un repère visuel sur ledit boitier.

### Brève description des dessins

La présente invention et ses avantages apparaîtront mieux dans la description suivante de plusieurs modes de réalisation donnés à titre d'exemples non limitatifs, en référence aux dessins annexés, dans lesquels:
- la figure 1 est une vue en perspective d'un dispositif de récupération d'énergie selon l'invention, installé autour d'un câble de puissance triphasé,
- la figure 2 est une vue en coupe radiale d'un dispositif de récupération d'énergie selon l'invention, installé autour d'un câble de puissance monophasé,
- la figure 3 est une vue en coupe similaire à la figure 2, d'un dispositif de récupération pour un câble de puissance monophasé, selon une première variante de réalisation de l'invention,
- la figure 4 est une vue en coupe radiale du circuit magnétique d'un dispositif de récupération pour un câble de puissance monophasé, selon une deuxième variante de réalisation de l'invention,
- la figure 5 est une vue en coupe similaire à la figure 4 d'un dispositif de récupération pour un câble de puissance monophasé, selon une troisième variante de réalisation de l'invention,
- la figure 6 est une vue en coupe radiale du circuit magnétique d'un dispositif de récupération d'énergie selon l'invention, installé autour d'un câble de puissance triphasé,
- la figure 7 est une vue en coupe similaire à la figure 6, montrant les lignes de champ magnétique générées par le courant primaire circulant dans les conducteurs de phase du câble de puissance triphasé,
- la figure 8 est une vue en coupe radiale du circuit magnétique et de son unité de traitement du signal, d'un dispositif de récupération pour un câble de puissance triphasé, selon une première variante de réalisation de l'invention,
- la figure 9 est une vue en coupe similaire à la figure 6 du circuit magnétique d'un dispositif de récupération pour un câble de puissance triphasé, selon une deuxième variante de réalisation de l'invention,
- la figure 10 est une vue en coupe radiale du circuit magnétique d'un dispositif de récupération d'énergie selon l'invention, installé autour d'un câble de puissance multiphasé, comportant trois conducteurs de phase et un conducteur de neutre,
- la figure 11 est une vue en coupe radiale du circuit magnétique d'un dispositif de récupération d'énergie selon l'invention, installé autour d'un câble de puissance multiphasé, comportant trois conducteurs de phase, un conducteur de neutre, et un conducteur de terre,
- -la figure 12 est un schéma du principe de fonctionnement d'un circuit magnétique pour un dispositif de récupération d'énergie selon un autre mode de réalisation de l'invention,
- La figure 13 est une vue de face d'un premier exemple de circuit magnétique exploitant le principe de la figure 12,
- La figure 14 est une vue de côté du circuit magnétique de la figure 13,
- La figure 15 est une vue de face d'un second exemple de circuit magnétique exploitant le principe de la figure 12,
- La figure 16 est une vue de côté du circuit magnétique de la figure 15,
- La figure 17 est une vue en coupe radiale du circuit magnétique d'un dispositif de récupération d'énergie selon une autre forme de réalisation de l'invention, installé autour d'un câble de puissance multiphasé, comportant trois conducteurs de phase, et
- La figure 18 est une vue en coupe radiale similaire à la figure 17 d'un dispositif de récupération d'énergie selon encore une autre forme de réalisation de l'invention.

### Description des modes de réalisation

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures.

En référence aux figures, le dispositif de récupération 10 d'énergie électrique selon l'invention constitue un dispositif non invasif pouvant être installé directement autour d'un câble de puissance 1 monophasé ou multiphasé. Il comporte un noyau magnétique 20 agencé pour former un circuit magnétique apte à capter un champ magnétique induit par un courant primaire traversant le câble de puissance 1 formant un circuit primaire. Il comporte également un bobinage de détection 30 disposé autour d'un tronçon du noyau magnétique 20 et formant un circuit secondaire pour induire un courant secondaire à partir du champ magnétique capté et fournir à ses bornes une tension de sortie exploitable U. Dans les exemples représentés, le noyau magnétique 20 présente la forme d'un tore fermé ou ouvrant. On entend par « tore », un solide de révolution ou non, de section circulaire ou non, formant une boucle tout autour du câble de puissance.

Pour obtenir la fonctionnalité et l'opérabilité du dispositif de récupération 10 monté comme un capteur de courant différentiel, le procédé de récupération d'énergie électrique selon l'invention consiste à réaliser un circuit magnétique hétérogène en créant volontairement des hétérogénéités et/ou des dissymétries au sein du dispositif de récupération 10 et/ou entre le dispositif de récupération 10 et le câble de puissance 1, pour exploiter un phénomène dit « des faux courants homopolaires » (thèse de Bruno Colin « Caractérisation et Réduction des Anomalies de Mesure dans les Capteurs de courant différentiels Différentiel » - thèse docteur de l'INP Grenoble présentée le 02 avril 2007). Dans les capteurs de courant différentiels, on cherche à réduire au maximum le risque d'apparition des faux courants homopolaires pour éviter de fausser la réponse du capteur, en soignant tout particulièrement la régularité, l'homogénéité et la symétrie de ces capteurs. Alors que dans l'invention, on cherche au contraire à exploiter le plus possible le phénomène des faux courants homopolaires pour provoquer la circulation d'un flux magnétique dans le noyau magnétique 20 et par conséquent générer aux bornes du bobinage de détection 30 un niveau de tension U suffisant pour alimenter des systèmes électriques externes, comme des capteurs, des sondes, et autres accessoires. Le procédé de récupération cherche en outre à créer des hétérogénéités et/ou des dissymétries les plus importantes possibles dans le but d'amplifier le phénomène des faux courants homopolaires pour augmenter le niveau de la tension de sortie exploitable U.

Les hétérogénéités et/ou les dissymétries créées au sein du dispositif de récupération 10 et/ou entre le dispositif de récupération 10 et le câble de puissance 1 peuvent être obtenues en jouant sur les différentes caractéristiques suivantes, qui peuvent être utilisées seules ou combinées entre elles pour amplifier le niveau de tension de sortie exploitable U :
- l'ajout d'un ou de plusieurs entrefers E, E1, E2 dans le noyau magnétique 20 pour créer une ou plusieurs coupures physiques et rendre le circuit magnétique hétérogène et dissymétrique,
- une répartition non uniforme du bobinage de détection 30 sur le noyau magnétique 20,
- une position du bobinage de détection 30 spécifique par rapport au(x) dit(s) entrefer(s) ajouté(s) dans le noyau magnétique 20,
- une position décentrée du noyau magnétique 20 par rapport au câble de puissance 1,
- une position angulaire ajustée du dispositif de récupération 10 par rapport au câble de puissance 1 de façon à maximiser le niveau de la tension de sortie exploitable U du dispositif de récupération 10,
- l'ajout d'un ou de plusieurs aimants dans le circuit magnétique pour saturer localement le noyau magnétique,
- l'ajout d'un ou de plusieurs angles dans le noyau magnétique.

Chacune de ces caractéristiques permet d'engendre des perturbations au sein dudit circuit magnétique contribuant à rendre le circuit magnétique hétérogène. Différents modes de réalisation sont décrits en référence aux figures pour illustrer la mise en oeuvre de ces caractéristiques, sans que ces exemples ne soient limitatifs.

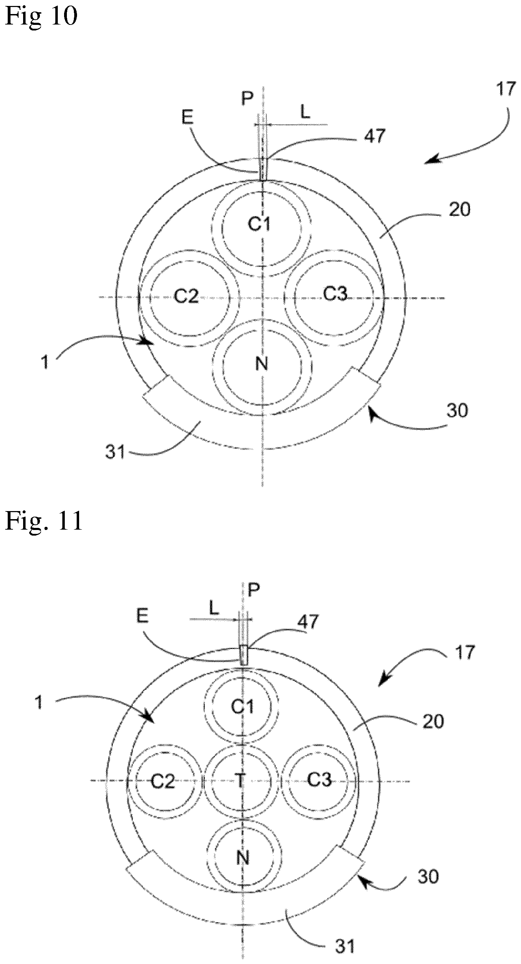

Par « câble de puissance », il faut comprendre tout câble de puissance 1 monophasé, triphasé ou multiphasé, qui comporte au moins deux conducteurs de phase C1, C2, C3, un conducteur de neutre N (fig. 10) et/ou un conducteur de terre T (fig.11). Il peut présenter une section circulaire conformément aux exemples représentés, mais également une section ovale, carrée, rectangulaire, ou toute autre section en fonction du besoin. Chaque conducteur de phase C1, C2, C3 est traversé par un courant, appelé aussi courant primaire. Chaque conducteur comporte une âme conductrice 2 en cuivre ou tout autre matériau électriquement conducteur, entourée d'une gaine isolante 3. Tous les conducteurs sont réunis dans une gaine de protection 4 et constituent ensemble le câble de puissance 1.

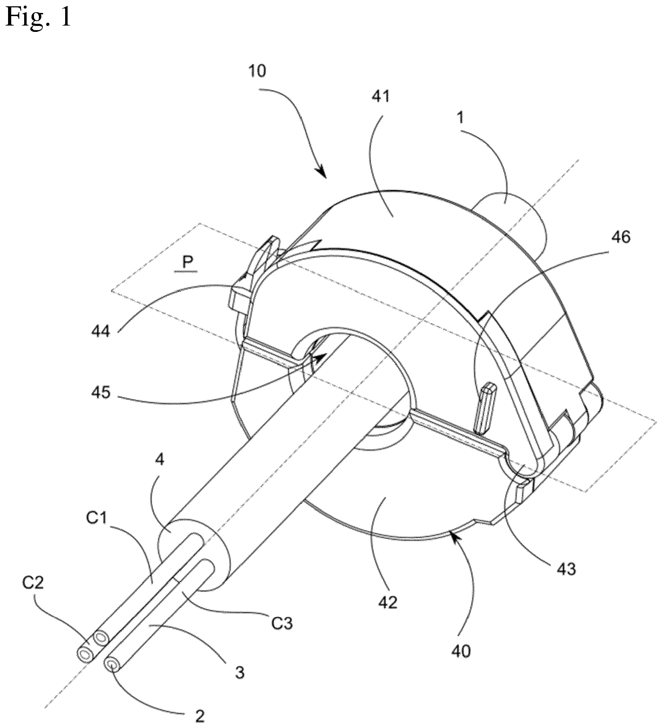

En référence plus particulièrement à la figure 1, le dispositif de récupération 10 comporte un boitier 40 ouvrant, dans lequel est logé le noyau magnétique 20 et le bobinage de détection 30. Le boitier 40 est de préférence réalisé dans un matériau isolant. Il peut former une coque dans laquelle le noyau magnétique pourvu de son bobinage de détection est monté via des organes de maintien, tels que des plots de positionnement, des organes ressorts, des cales en mousse, ou tout autre moyen équivalent. Il peut aussi être obtenu par surmoulage autour du noyau magnétique pourvu de son bobinage de détection, ou par tout autre procédé de fabrication et/ou de montage. Le boitier 40 comporte deux segments 41, 42 assemblés par une charnière 43 sur un des côtés et par un organe de verrouillage 44 sur l'autre côté. Le boitier 40 comporte une fenêtre de passage 45 pour un câble de puissance 1. La section de la fenêtre de passage 45 peut correspondre à la section du câble de puissance 1. En outre, la fenêtre de passage 45 peut être décentrée ou non par rapport au noyau magnétique 20 pour décentrer ou non le circuit secondaire par rapport au circuit primaire.

Le boîtier 40 peut comporter un repère visuel 46 sur un de ses flancs pour aider l'opérateur à détecter la position angulaire optimale du dispositif de récupération 10 par rapport aux conducteurs de phase C1, C2, C3 lors de son installation autour du câble de puissance 1, comme expliqué plus loin.

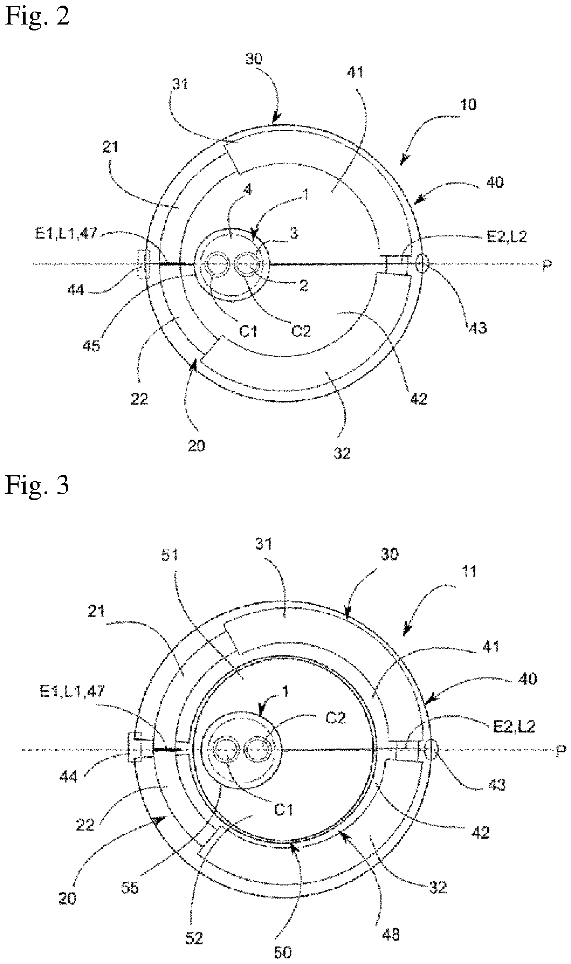

Les figures 2 à 5 illustrent quatre variantes de réalisation d'un dispositif de récupération 10, 11, 12, 13 conçu pour un câble de puissance 1 monophasé. Dans les différentes variantes, le dispositif de récupération 10, 11, 12, 13 est installé autour d'un câble de puissance 1 monophasé de manière décentrée, c'est-à-dire que le noyau magnétique 20 est décentré par rapport au câble de puissance 1 pour créer volontairement une dissymétrie dans le circuit magnétique entre le circuit primaire et le circuit secondaire.

Dans la figure 2, le dispositif de récupération 10 comporte le boitier 40 décrit en référence à la figure 1, comportant une fenêtre de passage 45 décentrée. Cette fenêtre de passage 45 est directement obtenue par la forme asymétrique des deux segments 41, 42 formant ledit boitier 40. Le dispositif de récupération 10 comporte en outre un noyau magnétique 20, sous la forme d'un tore ouvrant, de forme circulaire, et un bobinage de détection 30 divisé en deux bobines 31, 32. Les deux bobines 31, 32 doivent être raccordées en série pour additionner les tensions aux bornes de chaque bobine et obtenir un niveau de tension U le plus élevé possible.

Le noyau magnétique 20 ouvrant est constitué de deux demi-tores 21, 22. Ils sont de préférence symétriques par rapport à un plan médian P. Ainsi le noyau magnétique 20 comporte obligatoirement deux entrefers E1, E2 situés dans le plan médian P, ayant pour effet de rendre le circuit magnétique hétérogène. Pour ajouter une dissymétrie dans le circuit magnétique, les deux entrefers E1, E2 ont des largeurs différentes, à savoir : un entrefer principal E1 de largeur L1 entre les extrémités libres des deux demi-tores 21, 22, et un entrefer secondaire E2 de largeur L2 entre les extrémités en contact des deux demi-tores 21, 22, au droit de la charnière 43 du boitier 40, dans lesquels L2 étant inférieure à L1.

L'entrefer principal E1 peut avoir une largeur L1 au moins égale à 100µm. Pour garantir la largeur L1 lorsque le boitier 40 est fermé, on peut ajouter une entretoise 47 amagnétique calibrée dans l'entrefer principal E1, réalisée par exemple en Bakélite^{®}, en polychlorobiphényle (PCB), ou tout autre matériau amagnétique équivalent. En pratique, la largeur L1 de l'entrefer principal E1 peut être de préférence comprise entre 0.5 et 2mm.

L'entrefer secondaire E2 est plutôt perturbateur par rapport au fonctionnement du dispositif de récupération 10. On minimise alors sa largeur L2 pour réduire son effet. La coupe et le surfaçage des extrémités correspondantes des deux demi-tores 21, 22 du noyau magnétique 20 sont soignés pour obtenir une largeur L2 égale au plus à 20µm lorsque les deux extrémités sont en contact, sans que cette valeur ne soit limitative.

Le bobinage de détection 30 du dispositif de récupération 10 est constitué de deux bobines 31, 32 positionnées sur chaque demi-tore 21, 22 du noyau magnétique 20 et reliées en série, ayant pour effet d'augmenter le niveau de tension de sortie U exploitable aux bornes du bobinage de détection 30. Elles sont dans l'exemple représenté à la figure 2 identiques, s'étendent chacune sur un secteur angulaire inférieur à 180°, sont éloignées de l'entrefer principal E1, et disposées symétriquement par rapport au plan médian P, sans que ces caractéristiques et cette disposition ne soient limitatives.

La position angulaire optimale du dispositif de récupération 10 par rapport au câble de puissance 1 monophasé est telle que le plan médian P du noyau magnétique 20 passe par les deux conducteurs de phase C1 et C2, l'entrefer principal E1 est le plus proche possible d'un des conducteurs de phase C1, le bobinage de détection 30 est éloigné le plus possible des conducteurs de phase C1, C2 et de l'entrefer principal E1. L'entrefer principal E1 doit être de préférence positionné en face d'un conducteur de phase C1 car son but est de faire en sorte que les deux demi-tores 21 et 22 ne canalisent pas rigoureusement la somme des flux magnétiques générés par les conducteurs de phase C1 et C2. En outre, le bobinage de détection 30 doit être de préférence situé à l'opposé de l'entrefer principal E1, et centré sur l'axe des conducteurs de phase C1, C2 confondu avec le plan médian P pour récupérer un niveau de tension de sortie U suffisant aux bornes du bobinage de détection 30. Dans cette configuration, le flux magnétique est relativement homogène dans le noyau magnétique 20 et le bobinage de détection 30 peut être divisé en deux bobines 31, 32 ou plus. Les simulations, confirmées par des essais effectués en laboratoire, montrent en effet que les niveaux d'induction sont les plus importants dans l'alignement des conducteurs de phase C1, C2.

Le dispositif de récupération 11 de la figure 3 diffère de celui de la figure 2, par la façon de décentrer le noyau magnétique 20 par rapport au câble de puissance 30. Dans cette variante de réalisation, le boitier 40 ouvrant comporte deux segments 41, 42 symétriques en arc de cercle, délimitant une ouverture centrale 48 circulaire. On ajoute un organe de décentrage 50 soit dans l'ouverture centrale 48 du boitier 40, soit sur le câble de puissance 1 avant d'installer le dispositif de récupération 11. L'organe de décentrage 50 est formé de deux demi-coquilles 51, 52 qui délimitent entre elles une fenêtre de passage 55 décentrée pour le câble de puissance 1.

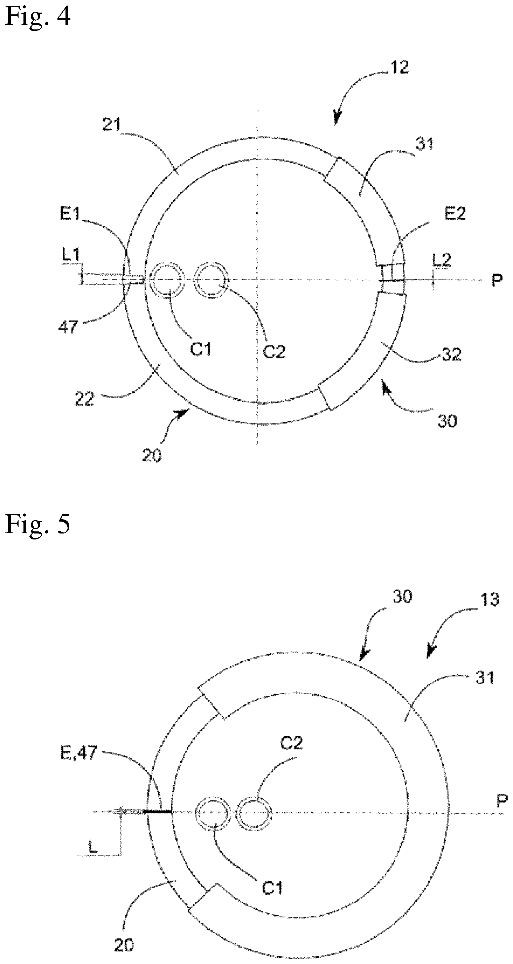

Le dispositif de récupération 12 de la figure 4 n'est représenté que par son noyau magnétique 20 et son bobinage de détection 30, et le câble de puissance 1 que par ses deux conducteurs de phase C1 et C2. Le dispositif de récupération 12 diffère de celui des figures 2 et 3 par son bobinage de détection 30, également divisé en deux bobines 31 et 32. Dans cet exemple, les deux bobines 31, 32 sont identiques, reliées en série, et s'étendent chacune sur un secteur angulaire inférieure à 90°. Elles sont, conformément à la position angulaire optimale déterminée par simulations et essais, situées dans une zone opposée à l'entrefer principal E1, lequel est situé en face d'un des conducteurs de phase C1 et dans l'alignement des deux conducteurs de phase C1 et C2.

Le dispositif de récupération 13 de la figure 5 n'est représenté que par son noyau magnétique 20 et son bobinage de détection 30, et le câble de puissance 1 que par ses deux conducteurs de phase C1 et C2. Le dispositif de récupération 13 diffère de celui des figures 2 à 4 par son noyau magnétique 20 qui est constitué d'un tore fermé pourvu d'un entrefer unique E, et par son bobinage de détection 30 qui s'étend sur un large secteur angulaire. Le bobinage de détection 30 peut être constitué d'une unique bobine 31 comme représenté, ou d'une pluralité de bobines reliées en série (non représentées). Il peut s'étendre sur un secteur angulaire d'environ 240°, centré sur un plan médian P passant par l'entrefer unique E. Le tronçon restant du noyau magnétique 20 dans lequel est situé l'entrefer unique E est laissé volontairement sans bobinage de détection, car le flux magnétique autour de l'entrefer unique E est faible, donc inexploitable, et peut en outre contrarier le flux magnétique circulant dans les spires du bobinage de détection 30.

Le noyau magnétique 20 fermé comporte un entrefer unique E, ayant pour effet de rendre le circuit magnétique hétérogène et parfaitement dissymétrique. Cet entrefer unique E est réalisé par une coupe complète de la section du noyau magnétique 20 et sa largeur L doit être au moins égale à 20µm. Pour des raisons de faisabilité industrielle, la largeur L de l'entrefer unique E est de préférence comprise entre 0.5 et 2mm. La largeur L de l'entrefer unique E peut également être garantie par l'ajout d'une entretoise 47 amagnétique calibrée, comme pour l'entrefer principal E1 des exemples précédents.

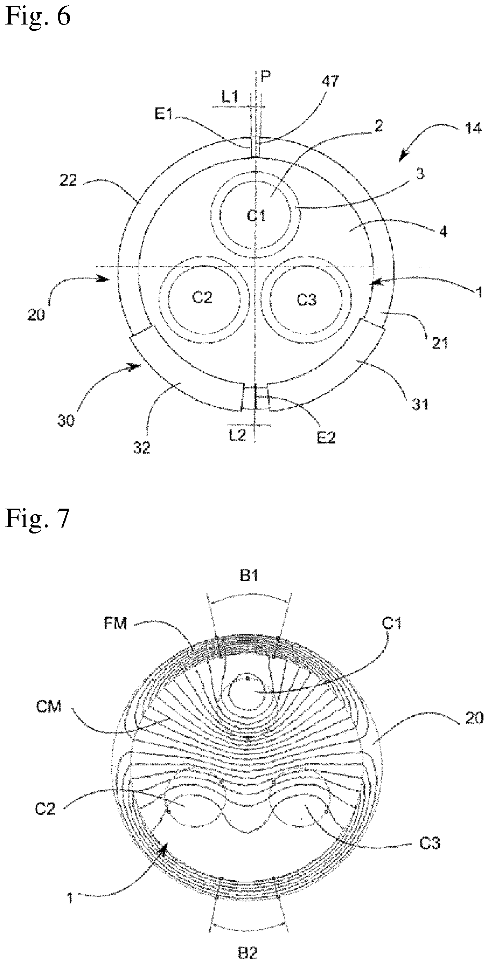

Les figures 6 à 9 illustrent quatre variantes de réalisation d'un dispositif de récupération 14, 15, 16 conçu pour un câble de puissance 1 triphasé. Dans les différentes variantes, le dispositif de récupération 14, 15, 16 est installé autour d'un câble de puissance 1 triphasé de manière centrée, mais pourrait être décentré en utilisant les moyens décrits en référence aux figures 2 et 3. Dans ces figures, le dispositif de récupération 14, 15, 16 n'est représenté que par son noyau magnétique 20 et son bobinage de détection 30, et le câble de puissance 1 que par ses trois conducteurs de phase C1, C2 et C3.

Dans la figure 6, le dispositif de récupération 14 présente la même configuration que celle du dispositif de récupération 12 de la figure 4. Il comporte un noyau magnétique 20 sous la forme d'un tore ouvrant et un bobinage de détection 30 divisé en deux bobines 31, 32 reliées en série. Le noyau magnétique 20 est constitué de deux demi-tores 21, 22 symétriques par rapport à un plan médian P. Il comporte deux entrefers E1, E2 situés dans le plan médian P et de largeurs différentes : un entrefer principal E1 de largeur L1 et un entrefer secondaire E2 de largeur L2 inférieure à la largeur L1.

La position angulaire optimale du dispositif de récupération 14 par rapport au câble de puissance 1 triphasé est telle que l'entrefer principal E1 est en face d'un des conducteurs de phase C1, et que le bobinage de détection 30 est dans une zone opposée à l'entrefer principal E1. Cette position angulaire optimale a été déterminée par simulations et confirmée par essais décrits en référence à la figure 7.

La figure 7 illustre le champ magnétique radial CM créé par le courant primaire circulant dans les phases C1, C2, C3 d'un câble de puissance 1 triphasé à un instant donné et le flux magnétique induit FM circulant dans un noyau magnétique 20 fermé et sans entrefer. Dans un réseau électrique équilibré, les courants qui circulent dans les trois phases C1, C2, C3 créent un flux magnétique FM tournant dans le noyau magnétique 20 placé autour de ces trois phases. Comme dans le cas d'un câble de puissance monophasé, la moyenne, sur une période, de la somme des champs magnétiques CM est nulle mais ceci n'est pas vrai dans des zones particulières du noyau magnétique 20. Par simulations, confirmées par essais, on a cherché à déterminer la position de ces zones particulières dans le noyau magnétique 20 et on a positionné deux bobines B 1 et B2 diamétralement opposées. La bobine B 1 qui récupère le plus de tension est celle qui est en regard d'une des phases C1. La tension étant en phase avec le courant, il n'est pas possible de mettre trois bobines en face de chaque phase et de relier ces bobines entre elles car les tensions sont déphasées de 120° les unes par rapport aux autres. L'addition de ces tensions ne peut donc pas être réalisée de façon simple.

Ces simulations et essais ont été répétés avec le même noyau magnétique (non représenté) cette fois-ci pourvu d'un entrefer, et plusieurs bobines réparties régulièrement sur le noyau magnétique pour tester les performances de cette topologie en fonction de la position de l'entrefer par rapport aux conducteurs de phase. Il ressort des résultats des simulations, confirmées par essais, que les bobines aux bornes desquelles la tension induite est la plus grande sont celles qui sont situées dans la zone opposée à l'entrefer et que la tension la plus grande récupérée aux bornes de ces bobines est obtenue quand l'entrefer est en face d'un des conducteurs de phase. C'est donc cette disposition qui a été retenue comme la position angulaire optimale du dispositif de récupération 14, 15, 16 par rapport à un câble de puissance 1 triphasé.

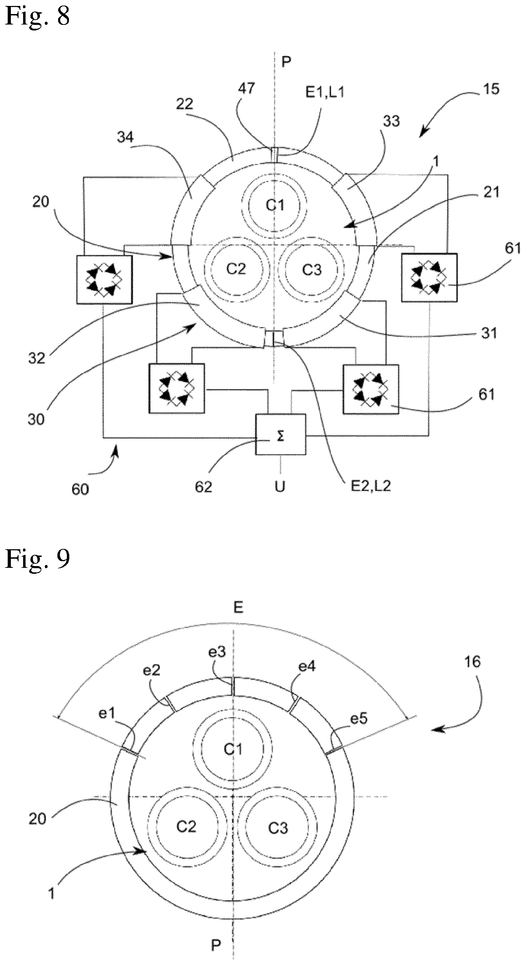

Le dispositif de récupération représenté 15 à la figure 8 diffère de celui de la figure 6 par son bobinage de détection 30 qui est constitué de quatre bobines 31, 32, 33, 34 reliées en série. Chaque bobine 31, 32, 33, 34 s'étend sur un secteur angulaire inférieur à 90° et sont symétriques deux à deux par rapport au plan médian P passant par les deux entrefers E1 et E2. Deux premières bobines 31 et 32 sont situées dans une zone opposée à l'entrefer principal E1 et deux secondes bobines 33 et 34 sont situées dans des zones latérales à l'entrefer principal E1 tout en restant éloignées dudit entrefer principal E1. Le niveau de tension aux bornes des premières bobines 31 et 32 est par conséquent bien supérieur au niveau de tension aux bornes des secondes bobines 33 et 34, lesquelles peuvent être optionnelles.

La figure 8 représente en outre une unité de traitement du signal 60, faisant partie intégrante du dispositif de récupération 15. Comme indiqué précédemment, si des bobines sont positionnées dans les trois secteurs situés entre les conducteurs de phase C1 et C2, C2 et C3, C3 et C1, les tensions induites sont déphasées de plus ou moins 120° et ne sont donc pas additionnables de façon simple. On peut cependant les redresser individuellement pour pouvoir ensuite en faire la somme. L'unité de traitement du signal 60 comporte à cet effet quatre ponts de diodes 61, chacun relié aux bornes d'une bobine 31, 32, 33, 34 pour redresser la tension aux bornes de chacune, et un sommateur 62 pour additionner les quatre tensions et obtenir un niveau de tension de sortie U le plus élevé possible.

Le dispositif de récupération 16 de la figure 9 est représenté uniquement par son noyau magnétique 20, qui peut être équipé d'un bobinage de détection 30 selon l'une au moins des variantes décrites en référence aux figures précédentes. Ce dispositif de récupération 16 diffère de celui des figures 6 et 7 par son noyau magnétique 20, qui se présente sous la forme d'un tore fermé, et par son entrefer unique E, qui est divisé en une pluralité d'entrefers élémentaires e1, e2, e3, e4, e5. La pluralité d'entrefers élémentaires e1, e2, e3, e4, e5 s'étend sur un secteur angulaire du noyau magnétique 20 au plus égal à 120°, centré sur un des conducteurs de phase C1. Les entrefers élémentaires e1, e2, e3, e4, e5 ont une largeur réduite par rapport à celle de l'entrefer unique E décrit en référence à la figure 4. Par exemple, la somme de la largeur des entrefers élémentaires e1, e2, e3, e4, e5 peut être sensiblement égale à la largeur L de l'entrefer unique E, Cet agencement permet de réduire les éventuelles lignes de fuite au niveau de l'entrefer unique E, et limiter ainsi les perturbations électromagnétiques.

Les figures 10 et 11 illustrent un même dispositif de récupération 17 conçu pour un câble de puissance 1 multiphasé. Dans la figure 10, le dispositif de récupération 17 est installé autour d'un câble de puissance 1 comportant quatre conducteurs, dont trois conducteurs de phase C1, C2, C3 et un conducteur de neutre N. Et dans la figure 11, le dispositif de récupération 17 est installé autour d'un câble de puissance 1 comportant cinq conducteurs, dont trois conducteurs de phase C1, C2, C3, un conducteur de neutre N et un conducteur de terre T. Les conducteurs sont centrés par rapport au noyau magnétique 20. Le dispositif de récupération 17 comporte un noyau magnétique 20 sous la forme d'un tore fermé, pourvu d'un entrefer unique E, et un bobinage de détection 30 constitué d'une seule bobine 31. Une version ouvrante du dispositif de récupération 17 existe aussi avec deux bobines réparties de chaque côté de l'entrefer secondaire E2 comme illustré à la figure 6.

Dans cette configuration, la position angulaire optimale du dispositif de récupération 17 par rapport à un câble de puissance 1 multiphasé est la même que celle décrite en référence à la figure 6. L'entrefer unique E est situé en face d'un des conducteurs de phase C1 et le bobinage de détection 30 est situé dans une zone opposée à l'entrefer unique E.

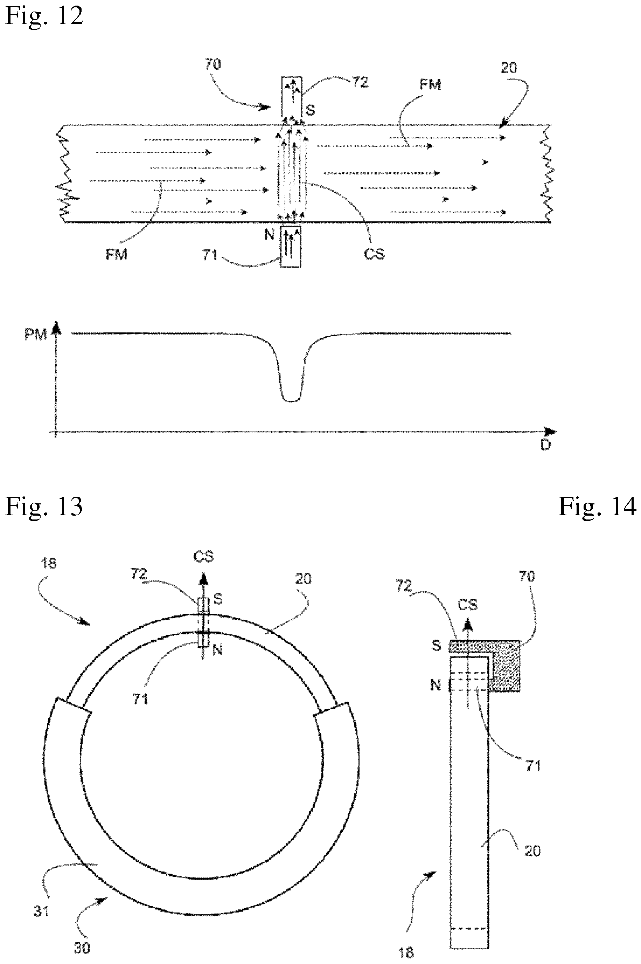

Les figures 12 à 16 illustrent deux autres modes de réalisation d'un dispositif de récupération 18, 19 selon l'invention, dans lesquels un aimant 70 est ajouté dans le circuit magnétique en remplacement ou en complément d'un des entrefers E, E1, E2. Dans un circuit magnétique, un entrefer est une zone dans laquelle la réluctance est forte par rapport à celle du reste du circuit. Pour augmenter localement la réluctance magnétique, on peut soit couper le circuit magnétique, ce qui a pour effet d'insérer une couche d'air avec une perméabilité magnétique relative égale à 1 comme dans les dispositifs des figures 2 à 11, soit saturer localement le matériau du noyau magnétique 20 pour réduire au minimum la perméabilité apparente vue par les lignes de champ induites par les courants primaires comme dans les figures 12 à 16.

Et pour saturer le matériau du noyau magnétique 20, il faut générer un champ magnétique secondaire, appelé champ de saturation CS, d'amplitude suffisante pour saturer localement le matériau magnétique (par exemple une valeur supérieure à 1000A/m pour un noyau magnétique en Fer-Silicium) et baisser localement la perméabilité magnétique par exemple à un niveau inférieur à 1000. En outre, il faut orienter le champ de saturation CS préférentiellement dans une direction perpendiculaire à celle des lignes de champ induites par les courants primaires. Ce champ de saturation CS peut être avantageusement généré par un ou plusieurs aimants 70. On choisira de préférence un aimant 70 permanent, dont les pôles 71 (Nord) et 72 (Sud) sont positionnés de chaque côté du noyau magnétique 20. La largeur de la zone saturée correspond sensiblement à la largeur des pôles 71, 72 de l'aimant 70.

La figure 12 illustre ce phénomène de saturation en montrant dans sa partie supérieure, un schéma d'un circuit magnétique comportant un aimant 70 disposé perpendiculairement à un tronçon d'un noyau magnétique 20, et dans sa partie inférieure un diagramme correspondant, illustrant une courbe de la perméabilité magnétique PM du noyau magnétique 20 sur la distance D dudit tronçon. On constate que l'aimant 70 génère entre son pôle nord 71 et son pôle sud 72 un champ de saturation CS, représenté par les lignes de champ CS, qui coupe perpendiculairement le flux magnétique induit par les courants primaires dans le noyau magnétique 20, représenté par les lignes de champ FM.

Le dispositif de récupération 18 des figures 13 et 14 est représenté par son noyau magnétique 20 fermé, et par son bobinage de détection 30 constitué d'une seule bobine 31, comme dans la figure 5. Ce dispositif de récupération 18 diffère de celui de la figure 5 par la présence d'un aimant 70 qui remplace l'entrefer E, ce qui peut être avantageux. L'aimant 70 permet de créer un « entrefer » sans couper physiquement le noyau, comme expliqué ci-dessus, ce qui peut être avantageux. Dans cet exemple, l'aimant 70 présente une forme de U dont les branches forment un pôle nord 71 (N) et un pôle sud 72 (S). Il est disposé latéralement et chevauche le noyau magnétique 20 pour créer un champ de saturation CS dirigé radialement, par exemple du centre vers l'extérieur du noyau magnétique 20.

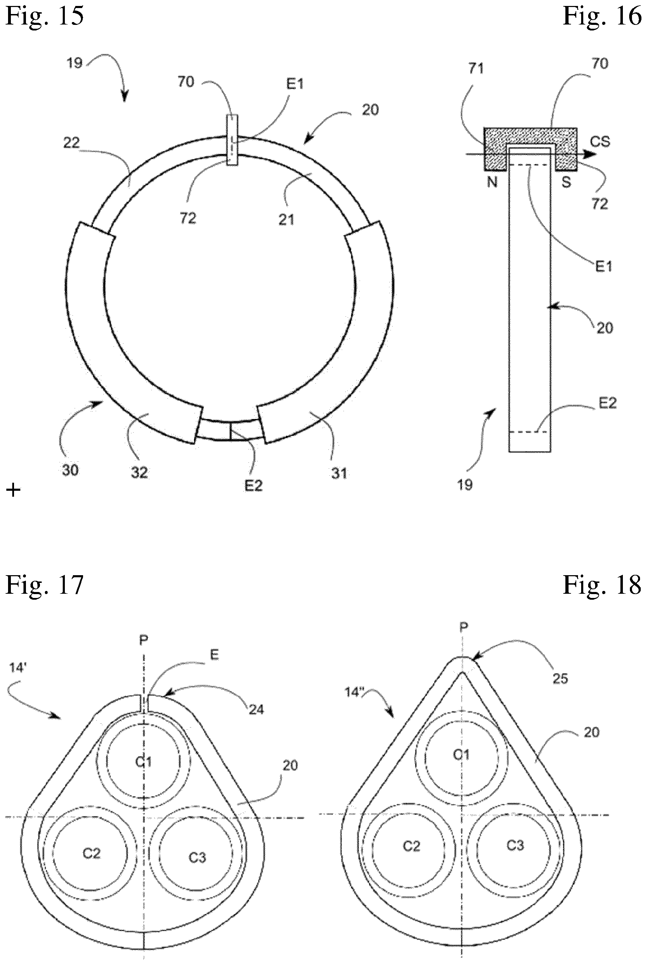

Le dispositif de récupération 19 des figures 15 et 16 est représenté par son noyau magnétique 20 ouvert comportant deux entrefers E1, E2, et par son bobinage de détection 30 constitué de deux bobines 31, 32, une sur chaque demi-tore 21, 22, comme dans les figures 2 et 3. Ce dispositif de récupération 19 diffère de ceux des figures 2 et 3 par la présence d'un aimant 70 qui complète l'entrefer principal E1. La présence de l'aimant 70 permet de réaliser deux entrefers E1, E2 de largeurs identiques, ce qui peut être avantageux. En effet, l'aimant 70 permet d'augmenter artificiellement la largeur d'un des deux entrefers E1, E2. Cet aimant 70 doit donc être positionné sur l'entrefer, et préférentiellement sur l'entrefer principal E1 plus accessible. Comme dans l'exemple précédent, l'aimant 70 présente une forme de U dont les branches forment un pôle nord 71 (N) et un pôle sud 72 (S). Il est cette fois-ci tourné d'un quart de tour pour être disposé tangentiellement sur le noyau magnétique 20 et créer un champ de saturation CS dirigé axialement, par exemple de gauche à droite sur la figure.

Bien entendu, la position latérale de l'aimant 70 dans le dispositif de récupération 18 peut convenir au dispositif de récupération 19, et inversement la position tangentielle de l'aimant 70 dans le dispositif de récupération 19 peut convenir au dispositif de récupération 18. De même, l'aimant 70, dans l'une ou l'autre de ses positions, peut être ajouté aux autres dispositifs de récupération 10 à 16, en complément et sur un des entrefers.

D'une manière générale, le noyau magnétique 20, utilisé dans le dispositif de récupération 10 à 19 de l'invention, est soit un tore fermé, soit un tore ouvrant. L'utilisation d'un tore fermé nécessite d'enfiler et de glisser le dispositif de récupération 13, 16, 17, 18 sur le câble de puissance 1 avant son raccordement. Sa position le long du câble de puissance 1 peut être adaptée en fonction du besoin. L'utilisation d'un tore ouvrant permet d'installer le dispositif de récupération 10, 11, 12, 14, 15, 19 sur un câble de puissance 1 déjà en place et sans avoir besoin de le débrancher. Le noyau magnétique 20 est préférentiellement réalisé dans un matériau à forte perméabilité magnétique de type alliage Fer-Nickel, amorphe ou nanocristallin, ou similaire. Dans les cas où les courants primaires dans les conducteurs de phase C1, C2, C3 sont forts (par exemple supérieurs à 50A), il est possible d'utiliser des alliages à plus faible perméabilité de type Fer-Silicium, ferrites, ou similaire.

Dans les exemples illustrés, le noyau magnétique 20 est constitué d'un tore circulaire, formant un solide de révolution, dont la section circulaire est parfaitement uniforme. Cet exemple n'est bien entendu pas le seul possible, et toute autre forme géométrique ou non peut convenir, dont la section est uniforme ou non. A titre d'exemple, on peut citer un tore de forme ovale, rectangulaire, carrée, triangulaire, hexagonale, ou quelconque, à condition qu'elle permette d'entourer complètement le câble de puissance 1. Il est ainsi possible de réaliser un noyau magnétique 20 avec un ou plusieurs angles et/ou coudes plus ou moins arrondis, contribuant à rendre le circuit magnétique hétérogène.

La figure 17 illustre un exemple d'un dispositif de récupération d'énergie 14' comportant un noyau magnétique 20 en forme d'oeuf dont le sommet comporte un angle arrondi 24. Dans cet exemple, la section du noyau est uniforme et les caractéristiques magnétiques sont homogènes dans l'ensemble du noyau magnétique 20. Dans ce cas, il convient alors d'ajouter un entrefer E et/ou un aimant (non représenté) pour créer une hétérogénéité dans le circuit magnétique. La position angulaire optimale du dispositif de récupération 14' correspond à celle illustrée dans laquelle l'entrefer E est prévu dans l'angle arrondi 24 et positionné face à un des conducteurs de phase C1 logé dans cet angle arrondi 24.

La figure 18 illustre un autre exemple d'un dispositif de récupération d'énergie 14" comportant un noyau magnétique 20 en forme d'oeuf dont le sommet comporte un angle vif 25. Dans cet exemple, la section du noyau n'est plus uniforme à l'endroit de l'angle vif 25 et les caractéristiques magnétiques du noyau magnétique 20 sont perturbées. Dans ce cas, il n'est plus nécessaire d'ajouter un entrefer E et/ou un aimant, car la présence de cet angle vif 25 contribue à créer une hétérogénéité dans le circuit magnétique. La position angulaire optimale du dispositif de récupération 14" correspond à celle illustrée dans laquelle un des conducteurs de phase C1 est logé et positionné face à cet angle vif 25.

Le bobinage de détection 30, utilisé dans le dispositif de récupération 10 à 19 de l'invention, est réalisé par une ou plusieurs bobines 31, 32, 33, 34, chaque bobine étant obtenue par l'enroulement d'au moins un fil de cuivre isolé par émaillage ou similaire. Les spires des bobines sont de préférence perpendiculaires aux lignes de champ circulant dans le noyau magnétique 20. Comme expliqué en référence aux figures, le bobinage de détection 30 est judicieusement situé dans une zone opposée à l'entrefer unique E ou principal E1, c'est-à-dire l'entrefer le plus large, ou encore dans une zone opposée à l'aimant 70 remplaçant ou complétant un des entrefers, ou enfin dans une zone opposée à l'angle 24, 25 créé dans le noyau magnétique 20. Il peut également être réparti sur l'ensemble du noyau magnétique 20 en laissant toutefois une portion libre d'environ 90° centrée sur l'entrefer unique E ou principal E1, ou encore sur l'aimant 70.

La tension U en sortie du bobinage de détection 30 est une tension alternative qui peut être utilisée sans mise en forme pour alimenter par exemple des systèmes d'éclairage. Pour l'alimentation de systèmes électroniques, cette tension U peut être redressée et filtrée par une unité de traitement du signal 60 (fig. 8) pour obtenir une tension continue. Cette unité de traitement du signal 60 peut être associée à un dispositif de stockage de l'énergie (non représenté) afin de disposer d'une autonomie suffisante dans le cas où il n'y a pas de courant primaire dans les conducteurs de phase.

La tension U en sortie du bobinage de détection 30, appelée aussi tension de sortie exploitable, doit avoir un niveau suffisant permettant soit d'alimenter un ou plusieurs systèmes électriques tels qu'à titre d'exemples non limitatifs un ou plusieurs capteurs de température, de position, de courant, d'usure, etc., un ou plusieurs éléments d'éclairage, de signalisation, de communication, etc., soit de fournir une indication de passage du courant primaire dans une installation électrique dans le cas d'un régime monophasé ou d'un régime triphasé parfaitement équilibré, sans que ces exemples d'application ne soient limitatifs. A titre d'exemple, la tension de sortie U exploitable peut être au moins égale à 3 Volts après traitement, sans que cette valeur ne soit limitative. Si les systèmes électriques autoalimentés sont des systèmes connectés qui communiquent par un système sans fil, alors la consommation instantanée de ces systèmes peut être plus élevée et devra être prise en compte dans la gestion de la tension de sortie U.

La position angulaire du dispositif de récupération 10 à 19 de l'invention par rapport au câble de puissance 1 est essentielle pour exploiter les faux courants homopolaires, et maximiser le niveau de la tension de sortie U exploitable. Une fois monté par exemple sur un câble de puissance 1 triphasé, le dispositif de récupération 10 à 19 doit être orienté afin de placer l'entrefer unique E ou principal E1 et/ou l'aimant 70 et/ou l'angle 24, 25 du noyau magnétique 20 en face d'un conducteur de phase C1, les deux autres conducteurs de phase C2, C3 seront alors à proximité de l'entrefer secondaire E2, s'il existe, et du bobinage de détection 30. Il est donc impératif de procéder à une opération d'ajustement angulaire de la position du dispositif de récupération 10 à 19 après fermeture de celui-ci sur le câble de puissance 1. Cette opération doit être réalisée en présence du courant primaire dans le câble de puissance. Il s'agit alors de rechercher la position angulaire optimale qui permet d'obtenir la tension de sortie U la plus élevée possible.

Un dispositif d'aide au positionnement (non représenté) permet de visualiser le moment où la position angulaire optimale est atteinte. Ce dispositif d'aide peut utiliser une détection de la tension U en sortie du bobinage de détection 30 combinée à un affichage sous la forme d'un repère visuel 46 (fig. 1) pour l'opérateur. Ce repère visuel 46 peut être une échelle graduée, une échelle de couleurs, une barrette de diodes électroluminescentes (Leds), un voyant, un écran de voltmètre ou une combinaison de ces moyens, associés ou non à un signal sonore. Ce dispositif d'aide au positionnement peut être soit intégré au boitier 40 (fig. 1), soit séparé et utilisé uniquement lors du montage du dispositif de récupération 10 à 19 sur le câble de puissance 1.

Une fois l'orientation optimale atteinte, la position du dispositif de récupération 10 à 19 peut être verrouillée sur le câble de puissance 1 par tout système de blocage adapté, démontable ou non, de type vis pointeau, mâchoires, colliers de serrage fixés sur des attaches (non représentées) intégrées au boitier.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Procédé de récupération d'énergie électrique à partir d'un câble de puissance (1) comportant au moins deux conducteurs de phase (C1, C2, C3), procédé consistant à installer autour dudit câble de puissance (1) un noyau magnétique (20) sous la forme d'un tore, pour former un circuit magnétique apte à capter un champ magnétique induit par un courant primaire traversant les conducteurs de phase dudit câble de puissance, à équiper ledit noyau magnétique (20) d'un bobinage de détection (30) pour induire une tension secondaire à partir dudit champ magnétique et délivrer aux bornes dudit bobinage de détection une tension de sortie (U) permettant d'alimenter différents types de systèmes électriques, ledit procédé consistant en outre à réaliser ledit circuit magnétique de manière hétérogène pour engendrer dans ledit circuit magnétique une circulation de flux magnétique dissymétrique, permettant de maximiser ladite tension de sortie (U) et d'obtenir ainsi une tension de sortie (U) exploitable aux bornes dudit bobinage de détection (30).

2. Procédé de récupération selon la revendication 1, consistant à créer dans ledit noyau magnétique (20) au moins un entrefer (E, E1, E2) pour créer ladite hétérogénéité dans le circuit magnétique et engendrer ladite dissymétrie dans la circulation du flux magnétique.

3. Procédé de récupération selon la revendication 2, consistant à utiliser un noyau magnétique (20) sous la forme d'un tore fermé et à pratiquer une coupe de la section dudit noyau magnétique (20) pour créer un entrefer unique (E) dont la largeur L est au moins égale à 100µm, et de préférence comprise entre 0.5 et 2mm.

4. Procédé de récupération selon la revendication 3, consistant à diviser ledit entrefer unique (E) en plusieurs entrefers élémentaires (e1, e2, e3, e4, e5) répartis sur un segment angulaire dudit noyau magnétique (20) au plus égal à 120°.

5. Procédé de récupération selon la revendication 2, consistant à couper en deux ledit noyau magnétique (20) pour former un tore ouvrant constitué de deux demi-tores (21, 22) et créer deux entrefers (E1, E2), dont un entrefer principal (E1) et un entrefer (E2).

6. Procédé de récupération selon la revendication 5, consistant à créer deux entrefers (E1, E2) de largeurs différentes, dont ledit entrefer principal (E1) de largeur L1 et ledit entrefer secondaire (E2) de largeur L2 inférieure à la largeur L1, la largeur L1 étant au moins égale à 100µm, et de préférence comprise entre 0.5 et 2mm, et la largeur L2 correspondant aux extrémités en contact des deux demi-tores (21, 22) et étant au plus égale à 20µm.

7. Procédé de récupération selon l'une quelconque des revendications 5 et 6, consistant à diviser ledit bobinage de détection (30) en au moins deux bobines (31, 32, 33, 34), situées dans une zone du noyau magnétique (20) opposée audit entrefer principal (E1), et disposées de part et d'autre dudit entrefer secondaire (E2).

8. Procédé de récupération selon l'une quelconque des revendications précédentes, consistant à décentrer ledit noyau magnétique (20) par rapport audit câble de puissance (1) pour introduire un décalage entre lesdits conducteurs de phase (C1, C2, C3) et ledit circuit magnétique, créer ladite hétérogénéité dans le circuit magnétique et engendrer ladite dissymétrie dans la circulation du flux magnétique.

9. Procédé de récupération selon l'une quelconque des revendications précédentes, consistant à ajouter un aimant dans ledit circuit magnétique en remplacement ou en complément d'un entrefer (E, E1, E2), agencé pour générer un champ de saturation (CS) qui coupe localement le flux magnétique induit (FM) dans ledit noyau magnétique (20) par ledit courant primaire, créer une hétérogénéité dans ledit circuit magnétique et engendrer une dissymétrie dans la circulation du flux magnétique.

10. Procédé de récupération selon l'une quelconque des revendications précédentes, consistant à réaliser un angle (25) dans ledit noyau magnétique (20) pour créer une hétérogénéité dans le circuit magnétique et engendrer une dissymétrie dans la circulation du flux magnétique.

11. Procédé de récupération selon l'une quelconque des revendications 2 à 10, consistant à positionner ledit bobinage de détection dans une zone dudit noyau magnétique (20) opposée audit entrefer (E, E1, E2), audit aimant (70) et/ou audit angle (24, 25) pour maximiser la tension de sortie (U) exploitable.

12. Procédé de récupération selon l'une quelconque des revendications 2 à 11, consistant à optimiser la position angulaire dudit noyau magnétique (20) par rapport audit câble de puissance (1) pour que ledit entrefer unique (E), ledit entrefer principal (E1), ledit aimant (70) et/ou ledit angle (24, 25) se situe en face d'un des conducteurs de phase (C1) dudit câble de puissance, position dans laquelle la tension de sortie (U) exploitable aux bornes dudit bobinage de détection est à son maximum.

13. Procédé de récupération selon la revendication 12, consistant à aligner ledit entrefer unique (E), ledit entrefer principal (E1), ledit aimant (70) et/ou ledit angle (24, 25) avec les deux conducteurs de phase (C1, C2) lorsque ledit câble de puissance (1) est monophasé.

14. Procédé de récupération selon l'une quelconque des revendications 12 et 13, consistant à détecter la tension de sortie (U) aux bornes dudit bobinage de détection (30) lors de l'installation dudit noyau magnétique (20) autour dudit câble de puissance (1) dans lequel circule ledit courant primaire, pour aider au repérage de ladite position angulaire optimale et à bloquer ledit noyau magnétique (20) dans cette position.

15. Dispositif de récupération (10 à 19) d'énergie à partir d'un câble de puissance (1) comportant au moins deux conducteurs de phase (C1, C2, C3), ledit dispositif comportant un noyau magnétique (20), sous la forme d'un tore fermé ou ouvrant, agencé pour être installé autour dudit câble de puissance (1) et former un circuit magnétique apte à capter un champ magnétique induit par un courant primaire traversant lesdits conducteurs de phase (C1, C2, C3), et un bobinage de détection (30) enroulé autour dudit noyau magnétique (20), agencé pour induire une tension secondaire à partir dudit champ magnétique et délivrer aux bornes dudit bobinage de détection (30) une tension de sortie (U) permettant d'alimenter différents types de systèmes électriques, dispositif de récupération (10 à 19) dans lequel ledit circuit magnétique est hétérogène pour engendrer dans ledit circuit magnétique une circulation de flux magnétique dissymétrique, permettant de maximiser ladite tension de sortie (U) et d'obtenir une tension de sortie (U) exploitable aux bornes dudit bobinage.

16. Dispositif de récupération selon la revendication 15, **caractérisé en ce que** ledit noyau magnétique (20) comporte au moins un entrefer (E, E1, E2) pour créer ladite hétérogénéité dans le circuit magnétique et ladite dissymétrie dans la circulation du flux magnétique.

17. Dispositif de récupération selon la revendication 16, **caractérisé en ce que** ledit noyau magnétique (20) est constitué d'un tore fermé, comportant un entrefer unique (E) dont la largeur L est au moins égale à 100µm, et de préférence comprise entre 0.5 et 2mm.

18. Dispositif de récupération selon la revendication 17, **caractérisé en ce que** ledit entrefer unique (E) est divisé en plusieurs entrefers élémentaires (e1, e2, e3, e4, e5), répartis sur un segment angulaire dudit noyau magnétique (20) au plus égal à 120°.

19. Dispositif de récupération selon la revendication 16, **caractérisé en ce que** ledit noyau magnétique (20) est constitué d'un tore ouvrant, comportant deux demi-tores (21 et 22) et deux entrefers (E1, E2), dont un entrefer principal (E1) et un entrefer secondaire (E2).

20. Dispositif de récupération selon la revendication 19, **caractérisé en ce que** les deux entrefers (E1, E2) ont des largeurs différentes : ledit entrefer principal (E1) ayant une largeur L1 et ledit entrefer secondaire (E2) ayant une largeur L2 inférieure à la largeur L1, la largeur L1 étant au moins égale à 100µm, et de préférence comprise entre 0.5 et 2mm, et la largeur L2 correspondant aux extrémités en contact des deux demi-tores (21, 22) et étant au plus égale à 20µm.

21. Dispositif de récupération selon l'une quelconque des revendications 19 et 20, **caractérisé en ce que** ledit bobinage de détection (30) est divisé en au moins deux bobines (31, 32, 33, 34), situées dans une zone du noyau magnétique (20) opposée audit entrefer principal (E1), et disposées de part et d'autre dudit entrefer secondaire (E2).

22. Dispositif de récupération selon l'une quelconque des revendications 15 à 21, **caractérisé en ce qu'**il comporte un boitier (40) ouvrant dans lequel sont logés ledit noyau magnétique (20) et ledit bobinage de détection (30), et **en ce que** ledit boitier (40) comporte une fenêtre de passage (45, 55) pour ledit câble de puissance (1), ladite fenêtre de passage (45, 55) étant décentrée par rapport audit noyau magnétique (20) pour introduire un décalage entre lesdits conducteurs de phase (C1, C2, C3) et ledit circuit magnétique, créer une hétérogénéité dans ledit circuit magnétique et engendrer une dissymétrie dans la circulation du flux magnétique.

23. Dispositif de récupération selon la revendication 22, **caractérisé en ce que** ladite fenêtre de passage (55) est ménagée dans un organe de décentrage (50) distinct dudit boitier (40).

24. Dispositif de récupération selon l'une quelconque des revendications 16 à 23, **caractérisé en ce qu'**il comporte un aimant dans ledit circuit magnétique en remplacement ou en complément d'un entrefer (E, E1, E2), agencé pour générer un champ de saturation (CS) qui coupe localement le flux magnétique induit (FM) dans ledit noyau magnétique (20) par ledit courant primaire, créer une hétérogénéité dans ledit circuit magnétique et engendrer une dissymétrie dans la circulation du flux magnétique.

25. Dispositif de récupération selon l'une quelconque des revendications 15 à 24, **caractérisé en ce que** ledit noyau magnétique (20) comporte un angle (25) pour créer une hétérogénéité dans le circuit magnétique et engendrer une dissymétrie dans la circulation du flux magnétique.

26. Dispositif de récupération selon l'une quelconque des revendications 16 à 25, **caractérisé en ce que** ledit bobinage de détection (30) est situé dans une zone dudit noyau magnétique (20) opposée audit entrefer (E, E1, E2), audit aimant (70) et/ou audit angle (24, 25) pour maximiser la tension de sortie (U) exploitable.

27. Dispositif de récupération selon l'une quelconque des revendications 16 à 26, **caractérisé en ce qu'**il comporte un dispositif d'aide au positionnement agencé pour détecter la position angulaire optimale dudit noyau magnétique (20) par rapport audit câble de puissance (1) pour que ledit entrefer unique (E), ledit entrefer principal (E1), ledit aimant (70) et/ou ledit angle (24, 25) se situe en face d'un des conducteurs de phase (C1) dudit câble de puissance (1), position angulaire optimale dans laquelle la tension de sortie (U) exploitable aux bornes dudit bobinage est à son maximum.

28. Dispositif de récupération selon les revendications 26 et 27, **caractérisé en ce que** ledit dispositif d'aide au positionnement comporte un repère visuel (46) sur ledit boitier (40).

## Patentansprüche

1. Verfahren zur Rückgewinnung von elektrischer Energie aus einem Leistungskabel (1) mit mindestens zwei Phasenleitern (C1, C2, C3), wobei das Verfahren darin besteht, einen Magnetkern (20) in Form eines Torus um das Leistungskabel (1) herum zu installieren, um einen Magnetkreis zu bilden, der ein Magnetfeld aufnehmen kann, das durch einen Primärstrom induziert wird, der durch die Phasenleiter des Leistungskabels fließt, den Magnetkern (20) mit einer Detektionsspule (30) auszustatten, um eine Sekundärspannung von dem Magnetfeld zu induzieren und an den Anschlüssen der Detektionsspule eine Ausgangsspannung (U) abzugeben, mit der verschiedene Arten von elektrischen Systemen versorgt werden können, wobei das Verfahren ferner darin besteht, den Magnetkreis heterogen zu gestalten, um in dem Magnetkreis eine asymmetrische Zirkulation des Magnetflusses zu erzeugen, wodurch die Ausgangsspannung (U) maximiert wird und somit eine nutzbare Ausgangsspannung (U) an den Anschlüssen der Detektionsspule (30) erzielt wird.

2. Rückgewinnungsverfahren nach Anspruch 1, bei dem in dem Magnetkern (20) mindestens ein Luftspalt (E, E1, E2) erzeugt wird, um die Heterogenität in dem Magnetkreis zu erzeugen und die Asymmetrie in der Zirkulation des magnetischen Flusses zu bewirken.

3. Rückgewinnungsverfahren nach Anspruch 2, bei dem ein Magnetkern (20) in Form eines geschlossenen Torus verwendet wird und der Magnetkern (20) quer geschnitten wird, um einen einzelnen Luftspalt (E) zu erzeugen, dessen Breite L mindestens 100 µm beträgt und vorzugsweise zwischen 0,5 und 2 mm liegt.

4. Rückgewinnungsverfahren nach Anspruch 3, das darin besteht, den einzelnen Luftspalt (E) in mehrere elementare Luftspalte (e1, e2, e, e4, e5) zu unterteilen, die über ein Winkelsegment des Magnetkerns (20) verteilt sind, das höchstens gleich 120° ist.

5. Rückgewinnungsverfahren nach Anspruch 2, das darin besteht, den Magnetkern (20) zu halbieren, um einen öffnenden Torus zu bilden, der aus zwei Halbkernen (21, 22) besteht, und zwei Luftspalte (E1, E2) zu erzeugen, von denen einer ein Hauptluftspalt (E1) und einer ein Luftspalt (E2) ist.

6. Rückgewinnungsverfahren nach Anspruch 5, das darin besteht, zwei Luftspalte (E1, E2) mit unterschiedlichen Breiten zu erzeugen, von denen der Hauptspalt (E1) eine Breite L1 und der Sekundärspalt (E2) eine Breite L2 aufweist, die kleiner als die Breite L1 ist, wobei die Breite L1 mindestens 100 µm und vorzugsweise zwischen 0,5 und 2 mm beträgt und die Breite L2 den in Kontakt stehenden Enden der beiden Halbkerne (21, 22) entspricht und höchstens 20 µm beträgt.

7. Rückgewinnungsverfahren nach einem der Ansprüche 5 bis 6, das darin besteht, die Detektionsspule (30) in mindestens zwei Spulen (31, 32, 33, 34) zu unterteilen, die sich in einem Bereich des Magnetkerns (20) befinden, der dem Hauptspalt (E1) gegenüberliegt, und die auf beiden Seiten des Sekundärspalts (E2) angeordnet sind.

8. Rückgewinnungsverfahren nach einem der vorhergehenden Ansprüche, das darin besteht, den Magnetkern (20) in Bezug auf das Leistungskabel (1) zu dezentrieren, um einen Versatz zwischen den Phasenleitern (C1, C2, C3) und dem Magnetkreis einzuführen, die Heterogenität im Magnetkreis zu erzeugen und eine Asymmetrie in der Zirkulation des Magnetflusses zu bewirken.

9. Rückgewinnungsverfahren nach einem der vorhergehenden Ansprüche, das darin besteht, einen Magneten in den Magnetkreis als Ersatz oder Ergänzung eines Luftspalts (E, E1, E2) hinzuzufügen, der so angeordnet ist, dass er ein Sättigungsfeld (CS) erzeugt, das den magnetischen Fluss (FM) lokal schneidet, der in dem Magnetkern (20) durch den Primärstrom induziert wird, eine Heterogenität in dem Magnetkreis bewirkt und eine Asymmetrie in der Zirkulation des magnetischen Flusses hervorruft.

10. Rückgewinnungsverfahren nach einem der vorhergehenden Ansprüche, bei dem ein Winkel (25) in dem Magnetkern (20) hergestellt wird, um eine Heterogenität im Magnetkreis zu erzeugen und eine Asymmetrie in der Zirkulation des Magnetflusses zu bewirken.

11. Rückgewinnungsverfahren nach einem der Ansprüche 2 bis 10, bei dem die Detektionsspule in einem Bereich des Magnetkerns (20) positioniert wird, der dem Luftspalt (E, E1, E2), dem Magneten (70) und/oder dem Winkel (24, 25) gegenüberliegt, um die nutzbare Ausgangsspannung (U) zu maximieren.

12. Rückgewinnungsverfahren nach einem der Ansprüche 2 bis 11, das darin besteht, die Winkelposition des Magneten (20) in Bezug auf das Leistungskabel (1) so zu optimieren, dass der einzelne Luftspalt (E), der Hauptluftspalt (E1), der Magnet (70) und/oder der Winkel (24, 25) einem der Phasenleiter (C1) des Leistungskabels gegenüberliegt, wobei die nutzbare Ausgangsspannung (U) an der Detektionsspule in dieser Position am höchsten ist.

13. Rückgewinnungsverfahren nach Anspruch 12, bei dem der einzelne Luftspalt (E), der Hauptluftspalt (E1), der Magnet (70) und/oder der Winkel (24, 25) mit den beiden Phasenleitern (C1, C2) ausgerichtet werden, wenn das Leistungskabel (1) einphasig ist.

14. Rückgewinnungsverfahren nach einem der Ansprüche 12 bis 13, das darin besteht, die Ausgangsspannung (U) an der Detektionsspule (30) zu erfassen, wenn der Magnetkern (20) um das Leistungskabel (1), in dem der Primärstrom fließt, installiert wird, um die Ermittlung der optimalen Winkelposition zu unterstützen, und den Magnetkern (20) in dieser Position zu blockieren.

15. Vorrichtung (10 bis 19) zur Rückgewinnung von Energie aus einem Leistungskabel (1) mit mindestens zwei Phasenleitern (C1, C2, C3), wobei die Vorrichtung einen Magnetkern (20) in Form eines geschlossenen oder öffnenden Torus umfasst, der so angeordnet ist, dass er um das Leistungskabel (1) herum installiert wird und einen Magnetkreis bildet, der ein Magnetfeld aufnehmen kann, das durch einen Primärstrom induziert wird, der durch die Phasenleiter (C1, C2, C3) fließt, und eine um den Magnetkern (20) gewickelte Detektionsspule (30), die so angeordnet ist, dass sie eine Sekundärspannung von dem Magnetfeld induziert und an die Detektionsspule (30) eine Ausgangsspannung (U) abgibt, die es ermöglicht, verschiedene Arten von elektrischen Systemen zu versorgen, Rückgewinnungsvorrichtung (10 bis 19), bei der der Magnetkreis heterogen ist, um in dem Magnetkreis eine Zirkulation des asymmetrischen Magnetflusses zu erzeugen, wodurch die Ausgangsspannung (U) maximiert und eine nutzbare Ausgangsspannung (U) an der Spule erzielt wird.

16. Rückgewinnungsvorrichtung nach Anspruch 15, **dadurch gekennzeichnet, dass** der Magnetkern (20) mindestens einen Luftspalt (E, E1, E2) aufweist, um die Heterogenität im Magnetkreis und die Asymmetrie in der Zirkulation des magnetischen Flusses zu erzeugen.

17. Rückgewinnungsvorrichtung nach Anspruch 16, **dadurch gekennzeichnet, dass** der Magnetkern (20) aus einem geschlossenen Torus mit einem einzigen Luftspalt (E) besteht, dessen Breite L mindestens 100 µm beträgt und vorzugsweise zwischen 0,5 und 2 mm liegt.

18. Rückgewinnungsvorrichtung nach Anspruch 17, **dadurch gekennzeichnet, dass** der einzelne Luftspalt (E) in mehrere elementare Luftspalte (e1, e2, e3, e4, e5) unterteilt ist, die über ein Winkelsegment des Magnetkerns (20) von höchstens gleich 120° verteilt sind.

19. Rückgewinnungsvorrichtung nach Anspruch 16, **dadurch gekennzeichnet, dass** der Magnetkern (20) aus einem öffnenden Torus besteht, der zwei Halbkerne (21 und 22) und zwei Luftspalte (E1, E2) umfasst, von denen einer ein Hauptluftspalt (E1) und einer ein Sekundärluftspalt (E2) ist.

20. Rückgewinnungsvorrichtung nach einem der Ansprüche 19, **dadurch gekennzeichnet, dass** die beiden Luftspalte (E1, E2) unterschiedliche Breiten haben: der Hauptluftspalt (E1) hat eine Breite L1 und der Sekundärluftspalt (E2) hat eine Breite L2, die unter der Breite L1 liegt, wobei die Breite L1 mindestens 100 µm und vorzugsweise zwischen 0,5 bis 2 mm beträgt und die Breite L2 den sich berührenden Enden der beiden Halbkerne (21, 22) entspricht und höchstens 20 µm beträgt.

21. Rückgewinnungsvorrichtung nach einem der Ansprüche 19 bis 20, **dadurch gekennzeichnet, dass** die Detektionsspule (30) in mindestens zwei Spulen (31, 32, 33, 34) unterteilt ist, die sich in einem Bereich des Magnetkerns (20) befinden, der dem Hauptluftspalt (E1) gegenüberliegt, und die auf beiden Seiten des Sekundärluftspalts (E2) angeordnet sind.

22. Rückgewinnungsvorrichtung nach einem der Ansprüche 15 bis 21, **dadurch gekennzeichnet, dass** sie ein öffnendes Gehäuse (40) umfasst, in dem der Magnetkern (20) und die Detektionsspule (30) untergebracht sind, und dass das Gehäuse (40) ein Durchgangsfenster (45, 55) für das Leistungskabel (1) umfasst, wobei das Durchgangsfenster (45, 55) in Bezug auf den Magnetkern (20) außermittig angeordnet ist, um einen Versatz zwischen den Phasenleitern (C1, C2, C3) und dem Magnetkreis einzuführen, eine Heterogenität in dem Magnetkreis zu erzeugen und eine Asymmetrie in der Zirkulation des magnetischen Flusses zu bewirken.

23. Rückgewinnungsvorrichtung nach Anspruch 22, **dadurch gekennzeichnet, dass** das Durchgangsfenster (55) in einem von dem Gehäuse (40) getrennten Dezentrierungsorgan (50) ausgebildet ist.

24. Rückgewinnungsvorrichtung nach einem der Ansprüche 16 bis 23, **dadurch gekennzeichnet, dass** sie einen Magneten in dem Magnetkreis anstelle oder zusätzlich zu einem Luftspalt (E, E1, E2) enthält, der so angeordnet ist, dass er ein Sättigungsfeld (CS) erzeugt, das den Magnetfluss (FM), der durch den Primärstrom in dem Magnetkern (20) induziert wird, lokal schneidet, eine Heterogenität in dem Magnetkreis hervorruft und eine Asymmetrie in der Zirkulation des Magnetflusses bewirkt.

25. Rückgewinnungsvorrichtung nach einem der Ansprüche 15 bis 24, **dadurch gekennzeichnet, dass** der Magnetkern (20) einen Winkel (25) aufweist, um eine Heterogenität im Magnetkreis zu bewirken und eine Asymmetrie in der Zirkulation des Magnetflusses zu erzeugen.

26. Rückgewinnungsvorrichtung nach einem der Ansprüche 16 bis 25, **dadurch gekennzeichnet, dass** die Detektionsspule (30) in einem Bereich des Magnetkerns (20) angeordnet ist, der dem Luftspalt (E, E1, E2), dem Magneten (70) und/oder dem Winkel (24, 25) gegenüberliegt, um die nutzbare Ausgansspannung (U) zu maximieren.

27. Rückgewinnungsvorrichtung nach einem der Ansprüche 16 bis 26, **dadurch gekennzeichnet, dass** sie eine Positionierungshilfe umfasst, die so angeordnet ist, dass sie die optimale Winkelposition des Magnetkerns (20) in Bezug auf das Leistungskabel (1) erfasst, damit der einzelne Luftspalt (E), der Hauptluftspalt (E1), der Magnet (70) und/oder der Winkel (24, 25) sich gegenüber einem der Phasenleiter (C1) des Leistungskabels (1) befindet, wobei die an der Spule nutzbare Ausgangsspannung (U) in dieser optimalen Winkelposition ihr Maximum erreicht.

28. Rückgewinnungsvorrichtung nach den Ansprüchen 26 und 27, **dadurch gekennzeichnet, dass** die Positionierungshilfe eine visuelle Markierung (46) auf dem Gehäuse (40) umfasst.

## Claims

1. A method of recovering electrical energy from a power cable (1) comprising at least two phase conductors (C1, C2, C3), the method installing around said power cable (1) a magnetic core (20) in the form of a torus, to form a magnetic circuit suitable for detecting a magnetic field induced by a primary current passing through the phase conductors of said power cable, equipping said magnetic core (20) with a detection coil (30) for inducing a secondary voltage from said magnetic field and delivering an output voltage (U) at the terminals of said detection coil, enabling different types of electrical systems to be supplied, said method further consisting of making said magnetic circuit heterogeneous in order to generate an asymmetrical magnetic flux flow within said magnetic circuit, enabling said output voltage (U) to be maximized and thus obtaining a usable output voltage (U) at the terminals of said detection coil (30).

2. The recovery method according to claim 1, consisting of said magnetic core (20) at least one air gap (E, E1, E2) to create said heterogeneity in the magnetic circuit and generate said asymmetry in the magnetic flux flow.

3. The recovery method according to claim 2, consisting of using a magnetic core (20) in the form of a closed torus and cutting the cross section of said magnetic core (20) to create a single air gap (E) whose width L is at least 100µm, and preferably between 0.5 and 2mm.

4. The recovery method according to claim 3, consisting of dividing said single air gap (E) into several elementary air gaps (e1, e2, e3, e4, e5) distributed over an angular segment of said magnetic core (20) at most equal to 120°.

5. The recovery method according to claim 2, consisting of cutting said magnetic core (20) in two to form an open torus made up of two half-tori (21, 22) and creating two air gaps (E1, E2), including a main air gap (E1) and an air gap (E2).

6. The recovery method according to claim 5, consisting of creating two air gaps (E1, E2) of different widths, including said main air gap (E1) of width L1 and said secondary air gap (E2) of width L2 less than width L1, width L1 being at least equal to 100µm, and preferably between 0.5 and 2mm, and width L2 corresponding to the ends in contact with the two half-tori (21, 22) and being at most equal to 20µm.

7. The recovery method according to any of claims 5 and 6, consisting of dividing said detection coil (30) into at least two coils (31, 32, 33, 34), located in a zone of the magnetic core (20) opposite said main air gap (E1), and placed on either side of said secondary air gap (E2).

8. The recovery method according to any of the preceding claims, consisting of decentering said magnetic core (20) with respect to said power cable (1) to introduce an offset between said phase conductors (C1, C2, C3) and said magnetic circuit, creating said heterogeneity in the magnetic circuit and generating said asymmetry in the magnetic flux flow.

9. The recovery method according to any of the preceding claims, consisting of adding a magnet in said magnetic circuit in replacement of or in addition to an air gap (E, E1, E2), arranged to generate a saturation field (CS) which locally cuts the magnetic flux induced (FM) in said magnetic core (20) by said primary current, creating heterogeneity in said magnetic circuit and generating an asymmetry in the magnetic flux flow.

10. The recovery method according to any of the preceding claims, consisting of creating an angle (25) in said magnetic core (20) to create heterogeneity in the magnetic circuit and generate an asymmetry in the magnetic flux flow.

11. The recovery method according to any of claims 2 to 10, consisting of positioning said detection coil in a zone of said magnetic core (20) opposite said air gap (E, E1, E2), said magnet (70) and/or said angle (24, 25) to maximize the usable output voltage (U).

12. The recovery method according to any of claims 2 to 11, consisting of optimizing the angular position of said magnetic core (20) with respect to said power cable (1) so that said single air gap (E), said main air gap (E1), said magnet (70) and/or said angle (24, 25) is located opposite one of the phase conductors (C1) of said power cable, in which position the output voltage (U) usable at the terminals of said detection coil is at its maximum.

13. The recovery method according to claim 12, consisting of aligning said single air gap (E), said main air gap (E1), said magnet (70) and/or said angle (24, 25) with the two phase conductors (C1, C2) when said power cable (1) is single-phase.

14. The recovery method according to any of claims 12 and 13, consisting of detecting the output voltage (U) at the terminals of said detection coil (30) when installing said magnetic core (20) around said power cable (1) in which said primary current flows, to assist in locating said optimum angular position and locking said magnetic core (20) in this position.

15. A device (10 to 19) for recovering energy from a power cable (1) comprising at least two phase conductors (C1, C2, C3), said device comprising a magnetic core (20), in the form of a closed or open torus, positioned to be installed around said power cable (1) and form a magnetic circuit capable of detecting a magnetic field induced by a primary current passing through said phase conductors (C1, C2, C3), and a detection coil (30) wound around said magnetic core (20), arranged to induce a secondary voltage from said magnetic field and deliver across said detection coil (30) an output voltage (U) for powering different types of electrical systems, a recovery device (10 to 19) in which said magnetic circuit is heterogeneous to generate an asymmetrical magnetic flux flow within said magnetic circuit, to maximize said output voltage (U) and to obtain a usable output voltage (U) at the terminals of said detection coil.

16. The recovery device of claim 15, **characterized in that** said magnetic core (20) comprises at least one air gap (E, E1, E2) to create said heterogeneity in the magnetic circuit and said asymmetry in the magnetic flux flow.

17. The recovery device as claimed in claim 16, **characterized in that** said magnetic core (20) consists of a closed torus, comprising a single air gap (E) whose width L is at least equal to 100µm, and preferably between 0.5 and 2mm.

18. The recovery device according to claim 17, **characterized in that** said single air gap (E) is divided into several elementary air gaps (e1, e2, e3, e4, e5), distributed over an angular segment of said magnetic core (20) at most equal to 120°.

19. The recovery device according to claim 16, **characterized in that** said magnetic core (20) is constituted by an open torus, comprising two half-tori (21 and 22) and two air gaps (E1, E2), including a main air gap (E1) and a secondary air gap (E2).

20. The recovery device according to claim 19, **characterized in that** the two air gaps (E1, E2) have different widths: said main air gap (E1) having a width L1 and said secondary air gap (E2) having a width L2 less than the width L1, the width L1 being at least 100µm, and preferably between 0.5 and 2mm, and the width L2 corresponding to the contacting ends of the two half-tori (21, 22) and being at most 20µm.

21. The recovery device according to any of claims 19 and 20, **characterized in that** said detection coil (30) is divided into at least two coils (31, 32, 33, 34), located in a zone of the magnetic core (20) opposite said main air gap (E1), and placed on either side of said secondary air gap (E2).

22. The recovery device according to any one of claims 15 to 21, **characterized in that** it comprises an openable housing (40) in which said magnetic core (20) and said detection coil (30) are kept, and **in that** said casing (40) comprises a passage window (45, 55) for said power cable (1), said passage window (45, 55) being off-center with respect to said magnetic core (20) to introduce an offset between said phase conductors (C1, C2, C3) and said magnetic circuit, create heterogeneity in said magnetic circuit and generate asymmetry in magnetic flux flow.

23. The recovery device as claimed in claim 22, **characterized in that** said passage window (55) is formed in an off-center member (50) separate from said housing (40).

24. The recovery device according to any of claims 16 to 23, **characterized in that** it comprises a magnet in said magnetic circuit in replacement of or in addition to an air gap (E, E1, E2), arranged to generate a saturation field (CS) which locally cuts off the magnetic flux induced (FM) in said magnetic core (20) by said primary current, creating heterogeneity in said magnetic circuit and generating an asymmetry in the magnetic flux flow.

25. The recovery device according to any of claims 15 to 24, **characterized in that** said magnetic core (20) has an angle (25) to create heterogeneity in the magnetic circuit and generate asymmetry in the magnetic flux flow.

26. The recovery device according to any of claims 16 to 25, **characterized in that** said detection coil (30) is located in a zone of said magnetic core (20) opposite said air gap (E, E1, E2), said magnet (70) and/or said angle (24, 25) to maximize the usable output voltage (U).

27. The recovery device according to any of claims 16 to 26, **characterized in that** it comprises a positioning aid for detecting the optimum angular position of said magnetic core (20) with respect to said power cable (1) so that said single air gap (E), said main air gap (E1), said magnet (70) and/or said angle (24, 25) is located opposite one of the phase conductors (C1) of said power cable (1), the optimum angular position in which the usable output voltage (U) at the terminals of said coil is at its maximum.

28. Recovery device according to claims 26 and 27, **characterized in that** said positioning aid comprises a visual marker (46) on said housing (40).
